Europäisches Patentamt

European Patent Office

Office européen des brevets

(19)

(11) **EP 0 743 512 A1**

## (12) DEMANDE DE BREVET EUROPEEN

(43) Date de publication:
   20.11.1996 Bulletin 1996/47

(51) Int Cl.$^6$: **G01N 21/27**

(21) Numéro de dépôt: **96401056.5**

(22) Date de dépôt: **14.05.1996**

(84) Etats contractants désignés:
   **BE CH DE DK ES GB IT LI NL SE**

(30) Priorité: **19.05.1995 FR 9505957**

(71) Demandeur: **ELF ANTAR FRANCE**
   **92400 Courbevoie (FR)**

(72) Inventeurs:
   • **SABY, Claude-Alain**
     **69500 BRON (FR)**

   • **RICOUX, Philippe**
     **69530 BRIGNAIS (FR)**

(74) Mandataire: **Timoney, Ian Charles Craig**
   **ELF AQUITAINE**
   **Departement Propriété Industrielle**
   **Tour Elf**
   **Cedex 45**
   **92078 Paris La Défense (FR)**

(54) **Procédé de correction d'un signal délivré par un instrument de mesure**

(57)    L'invention concerne un procédé de correction d'un signal délivré par un instrument de mesure esclave par rapport à un signal délivré par un instrument de mesure maître de même nature.

Selon l'invention on décompose en série des signaux de standardisation, délivrés par un instrument esclave et par un instrument maître, puis on établit des relations mathématiques entre les paramètres obtenus par les décompositions en série, puis on corrige les paramètres des signaux de l'instrument esclave, et on recompose les signaux de l'instrument esclave après correction de ses paramètres. L'invention trouve son application dans les laboratoires d'analyse et les unités de fabrication des industries chimiques, pétrolières, pétrochimiques, pharmaceutiques, cosmétologiques et agroalimentaires.

EP 0 743 512 A1

Printed by Jouve, 75001 PARIS (FR)

Description

## DOMAINE TECHNIQUE

La présente invention concerne un procédé de correction d'un signal délivré par un instrument de mesure esclave par rapport à un signal délivré par un instrument de mesure maître de même nature,pour utiliser sur l'instrument esclave un modèle de calibration établi préalablement sur l'instrument maître.

Elle trouve son application dans les laboratoires de contrôle, les laboratoires de recherche, les unités de production et les unités de fabrication des industries chimiques, pétrolières, pétrochimiques, pharmaceutiques, cosmétologiques et agro-alimentaires.

## ETAT DE LA TECHNIQUE ANTERIEURE

De nombreux instruments de mesure de caractéristiques physiques ou chimiques, par exemple les spectromètres, nécessitent une calibration.

Cette calibration consiste à établir un modèle qui représente la relation mathématique entre une caractéristique d'un produit analysé et le signal délivré par l'instrument comme résultat d'une analyse de ce produit.

Cette opération de calibration est longue et nécessite l'utilisation de plusieurs dizaines de produits et de préférence plus de 100, dont les caractéristiques sont déterminées par des mesures directes.

Cette opération de calibration ayant été effectuée sur un instrument donné, il est particulièrement intéressant d'utiliser le modèle obtenu sur un autre instrument de même nature pour éviter de refaire les opérations de calibration une deuxième fois. L'expérience prouve que si l'on procéde de cette manière, sans effectuer de corrections, les résultats obtenus ne sont pas satisfaisants.

En effet, cette manière de procéder ne permet pas de prendre en compte les différences de réponses instrumentales entre les deux instruments qui existent toujours en pratique.

Dans le cas d'instruments tels que les spectromètres infrarouge on peut citer comme origine de ces différences, les sources lumineuses différentes, les systèmes optiques différents, les détecteurs différents et d'une manière générale les caractéristiques différentes des composants des instruments.

De plus la réponse instrumentale d'un instrument donné varie dans le temps, par exemple en fonction de la température, du vieillissement des composants et de leur encrassement. D'une manière générale ces instruments ont tendance à dériver.

Pour pallier ces inconvénients, une méthode de transfert des spectres d'un instrument optique maître à un instrument optique esclave est décrite dans le brevet US 4,866,644.

Cette méthode comporte les étapes suivantes :

- Etape 1 : sélection d'un jeu de produits de standardisation représentatif des produits à analyser,
- Etape 2 : dérivation des spectres obtenus à partir du jeu de produits de standardisation,
- Etape 3 : choix, pour chaque longueur d'onde de l'instrument maître, d'une fenêtre spectrale des longueurs d'ondes voisines de l'instrument esclave.
- Etape 4 : établissement d'un modèle quadratique reliant les longueurs d'ondes de l'instrument maître aux longueurs d'ondes de l'instrument esclave.
- Etape 5 : calcul par interpolation des réponses des spectres délivrés par l'instrument esclave aux longueurs d'ondes suggérées par le modèle quadratique.
- Etape 6 : calcul de la correction de l'intensité spectrale à apporter aux signaux de l'instrument esclave par régression linéaire pour chaque longueur d'onde, sur les signaux de l'instrument maître aux longueurs d'ondes correspondantes.
- Etape 7 : établissement d'un fichier de standardisation dans lequel sont stockés des facteurs de correction des index des longueurs d'onde et des intensités spectrales.

Chaque spectre obtenu avec l'instrument esclave alimenté par un produit à analyser est standardisé au moyen du fichier de standardisation.

La méthode exposée ci-dessus est complexe et difficile à mettre en oeuvre pour les raisons suivantes :

- définition subjective de fenêtres spectrales pour l'instrument esclave,
- corrélation de chaque longueur d'onde de l'instrument maître aux longueurs d'onde de la fenêtre spectrale de l'esclave,
- établissement d'un modèle quadratique pour relier les longueurs d'onde de l'instrument maître aux longueurs d'onde de l'esclave.

Cette méthode présente en outre les inconvénients suivants:

- elle impose de travailler sur un nombre de signaux de produits de standardisation de préférence supérieur à 10.
- elle ne prend pas en compte la dérive du signal délivré par l'instrument esclave, ni les artéfacts locaux, et par conséquent ne permet pas de les corriger.
- elle nécessite des transformations préalables des signaux par dérivation et amène à manipuler des matrices de nombres de grande dimension par exemple 100 lignes, 1000 colonnes.
- enfin si les différences entre les spectres issus des instruments maître et esclave sont très faibles les résultats sont fortement erronés.

## EXPOSE DE L'INVENTION

La présente invention a justement pour objet de remédier à ces inconvénients, et notamment de fournir un procédé de correction d'un signal délivré par un instrument de mesure esclave par rapport à un signal délivré par un instrument maître, facile à mettre en oeuvre et de compréhension aisée.

Ce procédé est utilisable aussi bien dans les laboratoires de contrôle et de recherche que pour déterminer les caractéristiques d'un produit en cours de fabrication. A cette fin, la présente invention propose un procédé de correction d'un signal délivré comme résultat d'une analyse par un instrument de mesure esclave par rapport à un signal délivré par un instrument de mesure maître de même nature, lesdits instruments permettant de déterminer une caractéristique d'un produit analysé, au moyen d'un modèle de calibration de l'instrument maître, établissant la relation entre le signal obtenu avec ledit produit et la caractéristique recherchée, ledit procédé consistant à établir le modèle de calibration à partir d'une pluralité de produits de calibration de caractéristiques connues et à traiter chacun des signaux de standardisation obtenus à partir d'une pluralité de produits de même nature que les produits de calibration, caractérisé en ce qu'il comporte d'une part les étapes préalables suivantes :

- décomposition en série de chacun des signaux de standardisation délivrés par les instruments maître et esclave,
- établissement de relations mathématiques entre les paramètres résultant des décompositions en série desdits signaux,
- détermination des coefficients de correction des paramètres résultants de la décomposition en série des signaux de l'instrument esclave par rapport aux paramètres résultants de la décomposition en série des signaux de l'instrument maître, au moyen desdites relations mathématiques,
- stockage desdits coefficients de correction sous la forme d'une matrice de correction,

et d'autre part les étapes suivantes:

- décomposition en série d'un signal délivré par l'instrument esclave alimenté par le produit analysé,
- correction des coefficients issus de la décomposition en série, à l'aide de la matrice de correction,
- recomposition du signal délivré par l'instrument esclave alimenté par le produit analysé après correction des coefficients sous forme d'un signal corrigé,
- détermination de la caractéristique recherchée du produit analysé par l'instrument esclave à l'aide du modèle de calibration appliqué au signal corrigé.

## EXPOSE DETAILLE DE L'INVENTION

D'une manière générale le procédé de l'invention permet de corriger les signaux délivrés par des instruments utilisés pour déterminer des caractéristiques de produits à analyser.

A titre d'exemple non limitatif on peut citer les spectromètres infrarouge, proche infrarouge, moyen infrarouge les spectromètres de masse, les spectromètres à résonance magnétique nucléaire, les spectromètres ultraviolet.

Le procédé de l'invention consiste préalablement à l'utilisation d'un instrument esclave pour déterminer une caractéristique d'un produit analysé :

- à établir un modèle de calibration à partir des signaux issus d'un instrument de mesure maître de même nature que l'esclave, au moyen d'un jeu de produits de calibration dont les caractéristiques sont connues avec précision,
- puis à traiter les signaux de standardisation délivrés par l'instrument de mesure maître et 1' instrument de mesure esclave, chacun d'eux étant alimenté par un même jeu de produits de standardisation représentatif des caractéristiques ayant fait l'objet de la calibration.

Le procédé de l'invention consiste ensuite à décomposer en série chacun des signaux de standardisation délivrés respectivement par les instruments de mesure maître et esclave.

De cette façon, les composantes élevées des décompositions des signaux qui ne contiennent pas d'information utile peuvent être éliminées, ce qui permet de réduire le nombre de coefficients utiles à la représentation des signaux.

La méthode de décomposition est choisie parmi les méthodes qui permettent de recalculer les signaux d'origine à partir des éléments obtenus par la décomposition au moyen, d'une fonction de type inverse.

L'étape suivante du procédé de l'invention consiste à établir des relations mathématiques entre les coefficients obtenus par la décomposition en série des signaux délivrés respectivement par l'instrument maître et l'instrument esclave.

Ensuite, on détermine des coefficients de correction des paramètres résultants de la décomposition des signaux de l'instrument esclave par rapport aux paramètres résultants de la décomposition des signaux de l'instrument maître, au moyen des relations mathématiques établies à l'étape précédente.

Les coefficients de correction ainsi déterminés sont stockés sous la forme d'une matrice de correction.

Ces étapes de calibration, de standardisation, de détermination de la matrice des coefficients de correction étant réalisées, on utilise cette matrice de correction pour corriger un signal délivré comme résultat d'une analyse par l'instrument de mesure esclave en exécutant les étapes suivantes:

- décomposition en série d'un signal délivré par l'instrument esclave alimenté par le produit analysé,
- correction des coefficients issus de la décomposition en série, à l'aide de la matrice de correction,
- recomposition du signal délivré par l'instrument esclave alimenté par le produit analysé après correction des coefficients sous forme d'un signal corrigé,
- détermination de la caractéristique recherchée du produit analysé par l'instrument esclave à l'aide du modèle de calibration appliqué au signal corrigé.

Ce procédé ne met en oeuvre que des éléments objectifs et des méthodes simples, il permet de travailler sur un nombre réduit de signaux de standardisation par exemple inférieur à dix, il permet de s'affranchir de toute dérive du signal, de la présence d'artefacts locaux, et de la présence de bruit grace aux possibilités du traitement du signal

Ce procédé manipule des matrices de petite dimension, par exemple trente colonnes après décomposition du signal, comparées aux mille colonnes manipulées par les méthodes qui ne décomposent pas le signal, et 10 lignes correspondant au nombre de signaux de standardisation comparées aux 100 nécessaires aux méthodes connues.

Pour vérifier la validité des coefficients de la matrice de correction, on compare la valeur de la caractéristique d'au moins un produit de validation obtenue à partir du signal délivré par l'instrument esclave puis corrigé selon le procédé de l'invention, avec la valeur de cette même caractéristique obtenue pour le même produit de validation à partir du signal délivré par l'instrument maître.

Cette vérification se déroule de la manière suivante:

- on décompose en série le signal délivré par l'instrument esclave obtenu à partir d'un produit de validation,
- on corrige les paramètres de la décomposition précédentes au moyen de la matrice de correction,
- on recompose le signal délivré par l'instrument esclave pour obtenir le signal corrigé,
- on détermine la caractéristique du produit de validation à l'aide du modèle de calibration appliqué au signal corrigé,
- enfin on vérifie que la valeur obtenue est sensiblement égale à la valeur de la caractéristique obtenue pour le même produit de validation à partir du signal délivré par l'instrument maître avec le même modèle de calibration

Selon une autre caractéristique de l'invention, le procédé est utilisé pour corriger le signal délivré par l'instrument maître à un instant donné, par rapport au signal délivré par le même instrument à une période de temps antérieure. Ainsi le même instrument utilisé à des périodes de temps différentes est successivement l'instrument esclave et l'instrument maître. De cette façon, le procédé permet de corriger les dérives d'un instrument au cours du temps. Ces dérives peuvent résulter par exemple d'encrassement, de vieillissement, de variations de températures et plus généralement des conditions d'utilisation de l'instrument évolutives dans le temps.

Selon un mode de réalisation particulier de l'invention, la décomposition en série des signaux de standardisation délivrés par les instruments maître et esclaves, est réalisée au moyen de la transformée de Fourier.

Ainsi grâce à cette transformation, les signaux délivrés par les instruments exprimés dans le domaine du temps, sont représentés dans le domaine des fréquences.

La décomposition en série s'exprime de la manière suivante :

$$X\ (f)\ =\ \int_{-\infty}^{+\infty} x(t)\ \cos\ 2\pi ftdt\ -\ i \int_{-\infty}^{+\infty} x(t)\ \sin\ 2\pi ftdt$$

x(t) est le signal délivré par un instrument exprimé en fonction du temps,
t représente le temps,
f représente les fréquences,
X(f) est le signal délivré par l'instrument de mesure représenté dans le domaine des fréquences.

Sous forme discrète la transformée de Fourier s'exprime de la manière suivante :

$$F(k) = 1/n \sum_{i=0}^{n-1} y_i \exp(-j2i\pi k/n)$$

dans laquelle les $y_i$ sont les valeurs mesurées d'un signal décomposé en n points

F(k) sont les valeurs résultantes de la transformée de Fourier
k et i varient de 0 à n-1
n représente le nombre de points du signal, déterminé expérimentalement.

En fixant la valeur de n à quelques dizaines, par exemple 30, on élimine les coefficients de rangs supérieurs ce qui a un effet de filtrage et d'élimination des bruits.

En appliquant cette transformation on obtient pour chaque signal deux séries de coefficients, les coefficients réels r, $r_1$, $r_2$, $r_3$, ...$r_n$ et les coefficients imaginaires $k_1$, $k_2$, $k_3$, ...$k_n$.

L'application de la transformée de Fourier inverse permet de recomposer les signaux corrigés de l'instrument esclave par rapport à l'instrument maître par recomposition à partir des coefficients réels et imaginaires des signaux de l'instrument esclave corrigés par les relations mathématiques établies.

La transformée de Fourier discrete inverse est exprimée par la relation suivante:

$$z_i = 1/n \sum_{k=0}^{n-1} F(k)\ \exp(+j2\pi ik/n)$$

dans laquelle les $Z_i$ sont les valeurs recomposées du signal

n représente le nombre de points du signal,
déterminé expérimentalement.
k et i varient de 0 à n-1
F(k) sont les valeurs résultantes de la transformée de Fourier

Selon un autre mode de réalisation particulier de l'invention, la décomposition en série des signaux est effectuée par un algorithme de décomposition en ondelettes. Dans ce cas, le signal délivré par l'instrument de mesure est échantillonné et décomposé en une somme de fonctions localisées, associées à des échelles de temps différentes. Ainsi la base de décomposition peut être une base orthonormée ou non. L'intégrale de chaque ondelette est égale à zéro conformément à 1' expression suivante:

$$\int_{-\infty}^{+\infty} \psi_r(x)\ dx\ =\ 0$$

dans laquelle $\psi_r(x)$ désigne une fonction en ondelettes.

L'intéret de la décomposition en ondelette par rapport à la décomposition en série de Fourier réside dans le fait que chaque coefficient caractérise le signal de départ; et ainsi permet de travailler sur un nombre réduit de coefficients. La recomposition pour obtenir des sigaux corrigés est effectuée par un algorithme de reconstruction en ondelettes.

Selon une autre caractéristique de l'invention les relations mathématiques entre les paramètres résultant des décompositions en série sont des relations linéaires représentées par l'équation suivante :

$$B = \alpha + \beta \times A$$

dans laquelle :

B représente la matrice des coefficients obtenus par la décomposition en série des signaux délivrés par l'instrument esclave.

A représente la matrice des coefficients obtenus par la décomposition en série des signaux délivrés par l'instrument maître.

$\alpha$ et $\beta$ sont respectivement des matrices de coefficients de pente et de coefficients d'ordonnées à l'origine, estimés par un algorithme de régression.

Selon une autre caractéristique de l'invention les relations mathématiques entre les paramètres résultant des décompositions en série sont des relations polynomiales d'ordre au moins égal à deux, représentées par l'équation suivante :

$$B = g + \sum_{i=0}^{p} h(i) \times A^i$$

dans laquelle :

B représente la matrice des coefficients obtenus par la décomposition en série des signaux délivrés par l'instrument esclave,

A représente la matrice des coefficients obtenus par la décomposition en série des signaux délivrés par l'instrument maître,

g et h(i) sont des matrices de coefficients estimés par un algorithme de régression

p est supérieur ou égal à 2 et inférieur à n.

Selon une autre caractéristique de l'invention les relations mathématiques entre les paramètres résultants des décompositions en série sont choisies parmi des algorithmes représentant des courbes de croissance, comme par exemple les fonctions suivantes:

- exponentielle: $y = \alpha \beta^t$
- exponentielle modifiée : $y = \alpha \beta^t + \eta$
- de Gompertz $y = \exp(\alpha \beta^t + \eta)$
- logistique $y = 1/(\alpha \beta^t + \eta)$

Dans lesquelles les coefficients $\alpha, \beta$ et $\eta$, sont estimés par un algorithme de régression.

Selon une autre caractéristique de l'invention, l'algorithme de régression utilisé pour la détermination des matrices de coefficients qui interviennent dans les relations mathématiques entre les paramètres résultant des composition en série, sont des algorithmes linéaires ou non linéaires utilisant un critère de convergence, comme celui des moindres carrés ou du maximum de vraisemblance par exemple.

Selon une autre caractéristique de l'invention les relations mathématiques entre les paramètres résultant des décomposition en série, sont représentées par des réseaux de neurones. Les réseaux de neurones sont intéressants car d'une part ils offrent des capacités d'apprentissage qui permettent d'adapter les relations entre les signaux de calibration, et d'autre part ils prennent en compte les non linéarités entre les réponses des instruments maître et esclave. Cette caractéristique sera mieux comprise en se reportant à l'exemple décrit ci-après.

Exemple de relations mathématiques établies par réseaux de neurones:

- on met en oeuvre un réseau de neurones à 3 couches,
- les couches d'entrée et de sortie contiennent 35 neurones (nombre de coefficients de la transformée de Fourier des signaux issus de l'instrument esclave en entrée et de l'instrument maître en sortie),
- une couche cachée permet d'apprendre la fonction de correspondance,
- les fonctions d'activation des neurones sont des sigmoides et l'algorithme d'apprentissage utilise la méthode de rétropropagation du gradient,
- deux réseaux différents permettent d'apprendre la correspondance pour les coefficients réels et imaginaires,
- pour le cas cité on retient une architecture composée de 5 neurones pour la couche cachée.

**Revendications**

1. Procédé de correction d'un signal délivré comme résultat d'une analyse par un instrument de mesure esclave par rapport à un signal délivré par un instrument de mesure maître de même nature, lesdits instruments permettant de déterminer une caractéristique d'un produit analysé, au moyen d'un modèle de calibration de l'instrument maître, établissant la relation entre le signal obtenu avec ledit produit et la caractéristique recherchée, ledit procédé consistant à établir le modèle de calibration à partir d'une pluralité de produits de calibration de caractéristiques connues et à traiter chacun des signaux de standardisation obtenus à partir d'une pluralité de produits de même nature que les produits de calibration, caractérisé en ce qu'il comporte d'une part les étapes préalables suivantes :

   - décomposition en série de chacun des signaux de standardisation délivrés par les instruments maître et esclave,
   - établissement de relations mathématiques entre les paramètres résultant des décompositions en série desdits signaux,
   - détermination des coefficients de correction des paramètres résultants de la décomposition en série des signaux de l'instrument esclave par rapport aux paramètres résultants de la décomposition en série des signaux de l'instrument maître, au moyen desdites relations mathématiques,
   - stockage desdits coefficients de correction sous la forme d'une matrice de correction,

   et d'autre part les étapes suivantes:

   - décomposition en série d'un signal délivré par l'instrument esclave alimenté par le produit analysé,
   - correction des coefficients issus de la décomposition en série, à l'aide de la matrice de correction,
   - recomposition du signal délivré par l'instrument esclave alimenté par le produit analysé après correction des coefficients sous forme d'un signal corrigé,
   - détermination de la caractéristique recherchée du produit analysé par l'instrument esclave à l'aide du modèle de calibration appliqué au signal corrigé.

2. Procédé selon la revendication 1 caractérisé en ce que l'on vérifie la validité des coefficients de correction en exécutant les étapes suivantes:

   - décomposition en série d'au moins un signal délivré par l'instrument esclave, obtenu à partir d'au moins un produit de validation,
   - correction des paramètres de la décomposition précédente au moyen de la matrice de correction
   - recomposition du signal délivré par l'instrument esclave pour obtenir le signal corrigé,
   - détermination de la valeur de la caractéristique du produit de validation à l'aide du modèle de calibration appliqué au signal corrigé,
   - vérification que ladite valeur est sensiblement égale à la valeur de la caractéristique obtenue pour le même produit de validation à partir des signaux délivrés par l'instrument maître avec le même modèle de calibration

3. Procédé selon la revendication 1 ou 2 caractérisé en ce que l'instrument esclave et l'instrument maître sont le même instrument utilisé à des périodes de temps différentes.

4. Procédé selon l'une quelconque des revendications 1,2 ou 3 caractérisé en ce que la décomposition en série des signaux est réalisée au moyen de la transformée de Fourier et la recomposition au moyen de la transformée de Fourier inverse.

5. Procédé selon l'une quelconque des revendications 1,2 ou 3 caractérisé en ce que la décomposition en série et la recomposition des signaux sont effectuées par des algorithmes de décomposition et de reconstruction en ondelettes.

6. Procédé selon l'une quelconque des revendications 1, 2, 3,4 ou 5 caractérisé en ce que les relations mathématiques entre les paramètres résultants des décompositions en série sont des relations linéaires dont les coefficients sont estimés par un algorithme de régression.

7. Procédé selon l'une quelconque des revendications 1, 2, 3,4 ou 5 caractérisé en ce que les relations mathématiques entre les paramètres résultants des décompositions en série sont des relations polynomiales d'ordre au moins égal à deux, dont les coefficients sont estimés par un algorithme de régression.

8. Procédé selon l'une quelconque des revendications 1, 2, 3,4 ou 5 caractérisé en ce que les relations mathématiques entre les paramètres résultants des décompositions en série sont des relations choisies parmi des relations représentant des courbes de croissance dont les coefficients sont estimés par un algorithme de régression.

9. Procédé selon l'une des revendications 6, 7, ou 8 caractérisé en ce que l'algorithme de régression est un algorithme linéaire ou non linéaire.

10. Procédé selon l'une quelconque des revendications 1, 2, 3,4 ou 5 caractérisé en ce que les relations mathématiques entre les paramètres résultants des décompositions en série, sont représentées par des réseaux de neurones.

Office européen

des brevets

**RAPPORT DE RECHERCHE EUROPEENNE**

Numero de la demande

EP 96 40 1056

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | US-A-5 243 546 (MAGGARD)<br>* abrégé *<br>* colonne 7, ligne 35 - ligne 54 *<br>* colonne 8, ligne 38 - ligne 63 *<br>* colonne 9, ligne 52 - ligne 67 *<br>* colonne 10, ligne 11 - ligne 55 *<br>* colonne 11, ligne 50 - ligne 54 * | 1-4,6,9 | G01N21/27 |
| Y | * colonne 13, ligne 16 - ligne 34; exemples *<br>--- | 10 | |
| Y | EP-A-0 395 481 (SPECTRA-PHYSICS)<br>* page 6, ligne 1 - ligne 22 *<br>* page 7, ligne 9 - ligne 16 *<br>* page 29, ligne 1 - page 32, ligne 56 *<br>* figure 16 *<br>--- | 10 | |
| D,A | US-A-4 866 644 (SHENK)<br>* abrégé *<br>* colonne 3, ligne 47 - colonne 4, ligne 45 *<br>* colonne 4, ligne 51 - colonne 5, ligne 2 *<br>* colonne 5, ligne 27 - ligne 29 *<br>* figure 2 *<br>--- | 1,6,7,9 | |
| A | ANALYTICAL CHEMISTRY,<br>vol. 63, no. 23, 1 Décembre 1991, COLUMBUS US,<br>pages 2750-2756, XP000249569<br>Y. WANG ET AL: "Multivariate instrument standardization"<br>--- | | **DOMAINES TECHNIQUES RECHERCHES (Int.Cl.6)**<br><br>G01N |

-/--

Le présent rapport a été établi pour toutes les revendications

| Lieu de la recherche | Date d'achèvement de la recherche | Examinateur |
|---|---|---|
| LA HAYE | 23 Août 1996 | Thomas, R.M. |

**Office européen
des brevets**

## RAPPORT DE RECHERCHE EUROPEENNE

Numero de la demande

EP 96 40 1056

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | CHEMOMETRICS AND INTELLIGENT LABORATORY SYSTEMS, vol. 25, no. 2, Novembre 1994, AMSTERDAM NL, pages 85-97, XP000474059 O.E. DE NOORD: "Multivariate calibration standardization" --- | | |
| P,X | US-A-5 459 677 (KOWALSKI) * abrégé * * colonne 2, ligne 29 - colonne 3, ligne 30 * * colonne 9, ligne 6 - ligne 19 * ----- | 1-3,6 | |
| | | | **DOMAINES TECHNIQUES RECHERCHES (Int.Cl.6)** |

Le présent rapport a été établi pour toutes les revendications

| Lieu de la recherche | Date d'achèvement de la recherche | Examinateur |
|---|---|---|
| LA HAYE | 23 Août 1996 | Thomas, R.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P04C02)